# FASCICULE DE BREVET EUROPEEN

(11) **EP 0 947 130 B1**
(45) Date de publication et mention de la délivrance du brevet: **17.09.2003**
(21) Numéro de dépôt: 99400581.7
(22) Date de dépôt: 10.03.1999
(51) Int. Cl.: A01G 31/00

(54) **Milieu de culture pour plantes à base de fibres de bois et procédé d'obtention d'un tel milieu de culture**
Pflanzenzuchtmittel aus Holzfasern und Verfahren zur Herstellung eines solchen Zuchtmittels
Plant culture medium based on wood fibres and process for obtaining such a culture medium

(30) Priorité: 30.03.1998 FR 9803892
(43) Date de publication de la demande: 06.10.1999
(73) Titulaire: Florentaise, 44850 Saint Mars du Desert (FR)
(72) Inventeur: Masselin, Martine, 60750 Choisy-au-Bac (FR)
(74) Mandataire: Intès, Didier Gérard André

(56) Documents cités:
- FR-A- 2 193 350
- FR-A- 2 248 780
- FR-A- 2 556 930
- FR-A- 2 567 119
- FR-A- 2 625 645
- US-A- 5 413 618

## Description

La présente invention concerne un milieu de culture pour plantes à base de fibres de bois.

On connaît déjà, par le brevet n° 2 248 781, des milieux de culture à base de fibres de bois, dans lesquels les fibres sont agglomérées en graines ou en flocons serrés, dénommés "granofibres". Le brevet français n° 2 193 350 concerne quant à lui un procédé pour obtenir ces granofibres, selon lequel les fibres de bois sont soumises à un traitement à sec à la fin duquel elles sont conformées en agrégats relativement serrés et denses, puis un traitement humide, au cours duquel ces agrégats deviennent de véritables granulés fibreux.

Des granofibres donnent toute satisfaction mais leur inconvénient reste leur prix de revient relativement élevé du fait de la longueur du traitement à sec puis du traitement par voie humide, malgré les améliorations apportées dans ce domaine par le brevet français n° 2 193 350.

Par ailleurs, le brevet européen n° 0 147 349 propose d'utiliser comme milieu de culture des fibres de bois telles qu'elles sont obtenues directement après leur défibrage, sans subir aucun traitement subséquent

Ces fibres de bois initialement foisonnantes présentent un inconvénient qui réside principalement dans le fait que, si elles sont comprimées en vue de leur conditionnement ou de leur transport, elles ont tendance à s'agglomérer les unes aux autres, de sorte que les interstices entre les fibres sont durablement réduits, ce qui gêne la croissance des racines des végétaux. A l'inverse, si les fibres ne sont pas ou pratiquement pas comprimées, elles forment un ensemble peu cohérent, mal adapté pour certaines cultures, en particulier la culture dite " hors sol ".

L'invention a pour but de proposer un milieu de culture qui peut être produit de manière simple et économique et qui évite ou tout au moins limite les inconvénients évoqués ci-dessus.

Ce but est atteint grâce au fait que le milieu de culture selon l'invention comprend essentiellement des fibres de bois obtenues par défibrage et cuisson à la vapeur, et au moins partiellement enroulées sur elles-mêmes et accrochées les unes aux autres, selon la revendication 1.

L'adverbe "essentiellement" doit être compris comme signifiant que le matériau comprend presque seulement des fibres de bois au moins partiellement enroulées sur elles-mêmes, le pourcentage de fibres "non enroulées" étant pratiquement nul et le matériau comprenant éventuellement, outre les fibres, des produits adjuvants destinés à lui donner des propriétés particulières (engrais...).

La conformation originale des fibres utilisées dans le milieu de culture de l'invention permet de conférer à ce dernier une structure à la fois naturellement aérée et cohérente.

En effet, les fibres étant enroulées (en amorces de tortillons ou de spirales), elles se comportent comme de petits ressorts. Toutefois, l'enroulement des fibres favorise leur accrochage les unes dans les autres et la structure obtenue forme une sorte de nappe ouateuse dans laquelle les fibres sont à la fois entremêlées et distantes les unes des autres.

Il en résulte que, même quand les fibres sont comprimées, elles ne s'agglomèrent pas les unes aux autres et des interstices dans lesquels les racines des végétaux peuvent se développer restent préservés entre les fibres. A l'état non comprimé, le milieu de culture comporte au moins environ 50% d'air en volume (à pF1). Comme on le verra ultérieurement, l'étape "d'enroulement" n'augmente que peu les temps de production et donc le prix de revient du milieu de culture.

De préférence, le milieu de culture est conditionné en pains de culture comprimés dans des gaines. C'est en effet dans ce conditionnement que les avantages de la conformation particulière des fibres prennent toute leur importance.

Dans ces pains de culture, on obtient une meilleure aération que dans un matériau qui comprendrait uniquement des fibres initialement foisonnantes comprimées. En effet, les fibres enroulées ne s'écrasent pas trop sur elles-mêmes et il en résulte une meilleure aération finale du produit.

Les gaines peuvent être en plastique ou en matériau biodégradable. Les pains de culture peuvent être tronçonnés pour former autant de blocs dédiés, chacun, à l'enracinement d'une plante distincte. Ces pains de culture sont plus particulièrement destinés à la culture hors sol.

Après l'utilisation des pains, les gaines peuvent être éventrées pour libérer les fibres qu'elles contenaient et utiliser ces dernières pour une application ultérieure, par exemple pour le paillage ou l'amendement.

On choisira des fibres plus ou moins grossières en fonction de la nature des végétaux (la taille de leurs racines) que l'on envisagera de faire pousser sur le milieu de culture. Globalement, plus les fibres sont grossières, plus les interstices entre ces fibres sont grands, et plus les racines des végétaux auxquels convient le milieu de culture sont grosses. La taille des fibres dépend de l'intensité du défibrage et de l'essence de bois choisie. Ainsi, des arbres feuillus ont tendance à donner de plus petites fibres que les résineux.

Le milieu de culture conforme à l'invention peut éventuellement comporter des produits adjuvants aptes à lui donner des propriétés particulières. En particulier, le produit adjuvant peut comprendre un engrais de culture adapté à tel ou tel type de végétaux. On peut également prévoir un produit adjuvant comprenant un agent colorant, ce qui sera en particulier intéressant si l'on souhaite utiliser le milieu de culture de telle sorte qu'il soit apparent mais qu'il soit pratiquement confondu dans le milieu ambiant. En particulier, si ce dernier comporte de l'herbe, on pourra choisir une coloration verte.

L'invention concerne également un procédé d'obtention d'un milieu de culture à base de fibres de bois, comprenant une étape de défibrage de pièces de bois et de cuisson à la vapeur pour obtenir les fibres de bois.

Par les brevets français n° 2 193 350 et n° 2 248 781, on connaît un procédé d'obtention d'un milieu de culture à base de fibres de bois, dans lequel après leur défibrage, les fibres sont d'abord soumises à un traitement à sec permettant de les rassembler en agrégats fibreux relativement serrés, puis à un traitement humide visant à consolider ces agrégats pour provoquer un resserrement des fibres, ce qui revient en fait à conformer les agrégats en granulés. Le brevet français n° 2 193 350 évoque un traitement de 2 h pour obtenir, à partir d'une masse fibreuse foisonnante, des agrégats fibreux que l'on peut ensuite soumettre à un traitement humide. Ce traitement humide consiste à déposer un liquide sur la surface des agrégats fibreux, puis à faire sécher ce liquide à température élevée. Le traitement humide en lui-même, incluant le séchage, peut durer plusieurs dizaines de minutes.

Ainsi, la durée de traitement des fibres par le procédé divulgué par le brevet précité est relativement longue et peut atteindre plusieurs heures. Cette durée, bien que diminuée par rapport à celle des procédés antérieurs à celui que divulgue le brevet français n° 2 193 350, reste trop importante ce qui grève considérablement le prix de revient du milieu de culture.

Le brevet européen n° 0 147 349 propose d'utiliser tout simplement des fibres à leur sortie du défibreur. Ce procédé est évidemment beaucoup moins long que le précédent, mais il présente un inconvénient en ce qu'il conduit à l'obtention d'un produit difficile à manipuler. En particulier, si les fibres sont tassées ou comprimées immédiatement après leur égouttage, elles ont tendance à s'agglomérer en se collant les unes aux autres, et il est ensuite difficile de les aérer, ce qui nuit à la croissance de certains végétaux. A l'inverse, si ces fibres ne subissent aucune compression, elles forment un ensemble peu cohérent, mal adapté pour certaines cultures.

La présente invention vise à proposer un procédé à la fois simple et peu coûteux, qui permette d'obtenir un milieu de culture fiable et exempt ou sensiblement exempt des inconvénients précités.

Ce but est atteint grâce au fait que le procédé selon l'invention comporte une étape d'enroulement des fibres qui consiste à remuer lesdites fibres dans une enceinte seulement jusqu'à ce qu'elles soient au moins partiellement enroulées sur elles-mêmes et soient ainsi susceptibles de s'accrocher les unes aux autres.

De manière connue en soi, le défibrage est réalisé à partir de pièces de bois découpées en copeaux, ces copeaux étant cuits à la vapeur à des pressions de l'ordre de 6 bar à 10 bar, et à des températures de l'ordre de 150°C à 180°C. Après leur cuisson, les copeaux deviennent friables et le défibrage en tant que tel est réalisé à l'aide de disques rotatifs (par exemple un disque rotor et un disque stator) qui découpent les copeaux par cisaillement. Le défibrage en tant que tel s'effectue donc dans une ambiance saturée en vapeur d'eau et à température relativement élevée.

Selon l'invention, à leur sortie du défibreur, les fibres sont disposées dans une enceinte dans laquelle elles sont remuées seulement jusqu'à ce qu'elles s'enroulent au moins partiellement. Cette étape d'enroulement est rapide (par exemple 10 à 20 minutes) et peut être réalisée directement après l'égouttage des fibres qui termine l'étape de défibrage. L'étape d'enroulement est de préférence réalisée sans utiliser de vecteur liquide ou humide, l'humidité ambiante de l'enceinte étant seulement éventuellement due à l'humidité propre des fibres. La température dans l'enceinte peut être de l'ordre de 40°C.

Dans certains cas, il peut être avantageux de réaliser une étape de séchage au moins partiel à la suite de l'étape d'enroulement. Il faut alors toutefois faire en sorte d'éviter de dessécher les fibres ce qui risquerait d'amoindrir leur capacité de rétention et de restitution progressive de l'humidité. La Demanderesse a constaté qu'un séchage à l'air pulsé à une température de l'ordre de 160°C à 180°C, pendant quelques secondes, convient parfaitement.

Avantageusement, l'enceinte dans laquelle cet enroulement est réalisé est constituée par un tambour ou un cylindre entraîné en rotation. Ce cylindre peut être du même type que celui auquel fait référence le brevet français n° 2 193 350. Ainsi, avec un cylindre rempli aux 2/3 et entraîné en rotation pour que sa vitesse périphérique soit de l'ordre de 80 m/mn, la Demanderesse a constaté qu'il suffisait de faire tourner le cylindre pendant des durées de 10 à 20 mn (selon la taille des fibres) pour obtenir des fibres suffisamment enroulées. Ainsi, le procédé selon l'invention est extrêmement simple et sa durée est très nettement inférieure à celle du procédé que divulgue le brevet précité. Avec un tel cylindre, les fibres peuvent être séchées en étant entraînées dans un conduit de 120 m de longueur sous l'effet de l'air pulsé à 160°C, le temps total de passage dans le conduit étant d'environ 5 secondes.

Il faut noter que l'on peut profiter de l'étape d'enroulement pour mélanger au milieu de culture un produit adjuvant, par exemple un engrais, un produit de charge ou un colorant. On peut également ajouter ces produits après cette étape.

Ainsi, avec des fibres fines dont le diamètre est compris entre quelques centièmes de millimètres et quelques dixièmes de millimètres, il suffit de faire tourner le cylindre pendant environ 10 mn pour obtenir des fibres enroulées dont la capacité de rétention d'eau est de l'ordre de 40% en volume. Avec des fibres moyennes, dont le diamètre est compris entre quelques dixièmes de millimètres et un millimètre, on peut faire tourner le cylindre pendant environ 15 mn pour obtenir des fibres enroulées, dont la capacité de rétention d'eau est de l'ordre de 30% en volume. Enfin, avec des fibres grossières dont le diamètre est compris entre 1 mm et quelques millimètres, on peut faire tourner le cylindre pendant 20 mn pour obtenir des fibres enroulées dont la une capacité de rétention d'eau est de l'ordre de 15 % en volume. Globalement, on considère qu'une durée de séjour des fibres dans le tambour de l'ordre de 10 à 20 mn est tout à fait satisfaisante. La vitesse périphérique de rotation du tambour peut être comprise entre 70 m/mn et 90 m/mn.

De préférence, le procédé conforme à l'invention comporte, en outre, une étape de conditionnement dans laquelle les fibres sont comprimées et conformées en pains de culture enserrés dans des gaines. Dans ce cas, en particulier si les gaines sont en matière plastique non poreuse, l'étape de séchage constitue un préalable éminemment souhaitable.

C'est lorsque le milieu de culture est conditionné en pains de culture que les avantages de l'invention se font le plus sentir. En effet, dans ce cas, tout en présentant l'avantage de leur cohérence, qui permet d'utiliser des pains de culture pour la culture hors sol, soit en les utilisant en un seul morceau, soit en les tronçonnant bloc par bloc, le milieu de culture continue de présenter une structure suffisamment poreuse (dans laquelle les interstices entre les fibres sont suffisamment importants) pour permettre une bonne aération du milieu de culture, une réhumectation aisée de ce dernier et, surtout, un excellent enracinement des végétaux.

Pour réaliser cette étape de conditionnement, on pourra presser les fibres après l'étape d'enroulement et le séchage, à des pressions de l'ordre de 20 bar et enserrer le matériau pressé dans des gaines, par exemple des gaines plastiques. Pour l'utilisation, si les gaines ne sont pas préalablement aérées, il suffira de percer ces dernières par endroits de manière à permettre le contact direct entre les racines des végétaux et le milieu de culture, et permettre la réhumectation aisée de ce dernier.

Eventuellement, on peut effectuer un classement des fibres à l'issue de l'étape d'enroulement. Ce classement pourra permettre d'écarter des fibres trop fines, mal enroulées ou isolées, par exemple en vue de les replacer dans l'enceinte d'enroulement avec d'autres fibres fraîchement sorties du défibreur.

Selon les applications, on pourra choisir un bois plus ou moins tendre. Pour certaines applications, il sera préférable d'utiliser l'aubier.

## Revendications

1. Milieu de culture pour plantes à base de fibres de bois, comprenant essentiellement des fibres de bois obtenues par défibrage et cuisson à la vapeur, **caractérisé en ce que** ces fibres sont au moins partiellement enroulées sur elles-mêmes en amorces de tortillons ou de spirales et accrochées les unes aux autres.

2. Milieu de culture selon la revendication 1, **caractérisé en ce qu'**il est conditionné en pains de culture comprimés dans des gaines.

3. Milieu de culture selon la revendication 1 ou 2, **caractérisé en ce qu'**il comporte, en outre, un produit adjuvant comprenant un engrais de culture.

4. Milieu de culture selon l'une quelconque des revendications 1 à 3, **caractérisé en ce qu'**il comporte, en outre, un produit adjuvant comprenant un agent colorant.

5. Procédé d'obtention d'un milieu de culture à base de fibres de bois, comprenant une étape de défibrage de pièces de bois et de cuisson à la vapeur, pour obtenir les fibres de bois,
**caractérisé en ce qu'**il comporte une étape d'enroulement des fibres qui consiste à remuer lesdites fibres dans une enceinte seulement jusqu'à ce qu'elles soient au moins partiellement enroulées sur elles-mêmes en amorces de tortillons ou de spirales et soient ainsi susceptibles de s'accrocher les unes aux autres.

6. Procédé selon la revendication 5, **caractérisé en ce qu'**il comporte en outre une étape de séchage des fibres.

7. Procédé selon la revendication 5 ou 6, **caractérisé en ce qu'**il comporte, en outre, une étape de conditionnement dans laquelle les pelotes de fibres sont comprimées et conformées en pains de culture enserrés dans des gaines.

8. Procédé selon l'une quelconque des revendications 5 à 7, **caractérisé en ce que** l'enceinte est constituée par un tambour entraîné en rotation, la durée de séjour des fibres dans le tambour étant de l'ordre de 10 minutes à 20 minutes.

9. Procédé selon la revendication 8, **caractérisé en ce que** la vitesse périphérique de rotation du tambour est comprise entre 70 m/mn et 90 m/mn.

10. Procédé selon l'une quelconque des revendications 5 à 9, **caractérisé en ce qu'**il comprend une étape d'addition d'un produit adjuvant.

## Patentansprüche

1. Kulturmedium für Pflanzen auf der Grundlage von Holzfasern, umfassend im Wesentlichen Holzfasern, die durch Holzzerfasern und Kochen mit Dampf erhalten wurden, **dadurch gekennzeichnet, dass** diese Fasem zumindest teilweise auf sich selbst als Ausgangspunkte für Verdrillungen oder Spiralen aufgewickelt sind und miteinander verhakt sind.

2. Kulturmedium nach Anspruch 1, **dadurch gekennzeichnet, dass** es zu komprimierten Kulturmassen in Schutzhüllen geformt ist.

3. Kulturmedium nach Anspruch 1 oder 2, **dadurch gekennzeichnet, dass** es darüber hinaus ein Hilfsprodukt umfasst, das einen Kulturdünger umfasst.

4. Kulturmedium nach einem der Ansprüche 1 bis 3, **dadurch gekennzeichnet, dass** es darüber hinaus ein Hilfsprodukt umfasst, das ein färbendes Mittel umfasst.

5. Verfahren zum Erhalt eines Kulturmediums auf der Grundlage von Holzfasern, welches einen Schritt des Zerfaserns von Holzstücken und das Kochen mit Dampf umfasst, um die Holzfasern zu erhalten,
**dadurch gekennzeichnet, daß** es einen Schritt der Aufrollung der Fasern umfasst, der darin besteht, die Fasern in einem Behältnis nur umzurühren, bis sie zumindest teilweise auf sich selbst als Ausgangspunkte für Verdrillungen oder Spiralen aufgerollt sind und sich so miteinander verhaken können.

6. Verfahren nach Anspruch 5, **dadurch gekennzeichnet, dass** es darüber hinaus einen Schritt der Trocknung der Fasern enthält.

7. Verfahren nach Anspruch 5 oder 6, **dadurch gekennzeichnet, dass** es darüber hinaus einen Schritt der Formung enthält, in dem die Faserknäuel komprimiert werden und zu Kulturmassen gebildet werden, die in Schutzhüllen eingeführt sind.

8. Verfahren nach einem der Ansprüche 5 bis 7, **dadurch gekennzeichnet, dass** das Behältnis aus einer Trommel besteht, die gedreht wird, wobei die Verweildauer der Fasern in der Trommel in der Größenordnung von 10 Minuten bis 20 Minuten ist.

9. Verfahren nach Anspruch 8, **dadurch gekennzeichnet, dass** die Umfangsgeschwindigkeit der Trommel 70 m/min bis 90 m/min beträgt.

10. Verfahren nach einem der Ansprüche 5 bis 9, **dadurch gekennzeichnet, dass** es einen Schritt der Zugabe eines Hilfsprodukts umfasst.

## Claims

1. Culture medium for plants which is based on wood fibres and essentially comprises wood fibres obtained by grinding and steam-cooking, **characterised in that** these fibres are at least partially rolled up on themselves as the beginnings of twists or spirals and hooked into one another.

2. Culture medium according to claim 1, **characterised in that** it is made up into culture slabs compressed into sheaths.

3. Culture medium according to claim 1 or 2, **characterised in that** it includes, in addition, an additive comprising a culture fertiliser.

4. Culture medium according to any one of claims 1 to 3, **characterised in that** it includes, in addition, an additive comprising a colouring agent.

5. Method of obtaining a culture medium based on wood fibres, comprising a stage of grinding pieces of wood and of steam-cooking in order to obtain the wood fibres,
**characterised in that** it includes a stage of rolling up the fibres which consists in stirring said fibres in an enclosure only until they are at least partially rolled up on themselves as the beginnings of twists or spirals and are thus capable of hooking into one another.

6. Method according to claim 5, **characterised in that** it includes in addition a stage of drying the fibres.

7. Method according to claim 5 or 6, **characterised in that** it includes, in addition, a processing stage in which the fibre twists are compressed and shaped into culture slabs tightly fitted into sheaths.

8. Method according to any one of claims 5 to 7, **characterised in that** the enclosure is made up of a drum driven in rotation, the period during which the fibres stay in the drum being of the order of 10 minutes to 20 minutes.

9. Method according to claim 8, **characterised in that** the peripheral speed of the drum is between 70 m/min and 90 m/min.

10. Method according to any one of claims 5 to 9, **characterised in that** it comprises a stage of adding an additive.
